**Europäisches Patentamt**

**European Patent Office**

**Office européen des brevets**

(19)

(11) Veröffentlichungsnummer : **0 208 107**
**B1**

(12) EUROPÄISCHE PATENTSCHRIFT

(45) Veröffentlichungstag der Patentschrift :
22.02.89

(51) Int. Cl.⁴ : **C 08 L 67/02** // (C08L67/02,
69:00)

(21) Anmeldenummer : **86107147.0**

(22) Anmeldetag : **27.05.86**

(54) Schalgzähe thermoplastische Polyestermassen mit niedriger Schmelzviskosität, Verfahren zu ihrer Herstellung und ihre Verwendung zur Herstellung von Formkörpern.

(30) Priorität : 08.06.85 DE 3520661

(43) Veröffentlichungstag der Anmeldung :
14.01.87 Patentblatt 87/03

(45) Bekanntmachung des Hinweises auf die Patenterteilung : 22.02.89 Patentblatt 89/08

(84) Benannte Vertragsstaaten :
CH DE FR GB IT LI NL

(56) Entgegenhaltungen :
DE--A-- 2 756 925
FR--A-- 2 286 846
US--A-- 4 171 422
Die Akte enthält technische Angaben, die nach dem
Eingang der Anmeldung eingereicht wurden und die
nicht in dieser Patentschrift enthalten sind.

(73) Patentinhaber : BAYER AG
Konzernverwaltung RP Patentabteilung
D-5090 Leverkusen 1 Bayerwerk (DE)

(72) Erfinder : Buysch, Hans-Josef, Dr.
Brandenburger Strasse 28
D-4150 Krefeld (DE)
Erfinder : Schön, Norbert, Dr.
Wilhelmshofallee 82
D-4150 Krefeld (DE)
Erfinder : Richter, Wolfgang, Dr.
Scheiblerstrasse 111
D-4150 Krefeld (DE)
Erfinder : Binsack, Rudolf, Dr.
Bethelstrasse 4a
D-4150 Krefeld (DE)
Erfinder : Köhler, Karl-Heinz, Dr.
Buschstrasse 165
D-4150 Krefeld (DE)
Erfinder : Rempel, Dieter, Dr.
Max-Beckmann-Strasse 35
D-5090 Leverkusen 1 (DE)

Jouve, 18, rue St-Denis, 75001 Paris, France

# EP 0 208 107 B1

**Beschreibung**

Die Erfindung betrifft schlagzähe thermoplastisch verarbeitbare Massen mit niedriger Schmelzviskosität aus Polyalkylenterephthalat und aliphatischem Polycarbonat mit niedrigem Molekulargewicht, ein Verfahren zur Herstellung dieser Massen und ihre Verwendung zur Herstellung von Formkörpern, vornehmlich durch Spritzguß.

Thermoplastische Polyester haben wegen ihrer wertvollen technologischen Eigenschaften, wie z. B. Steifigkeit, Härte, Abriebfestigkeit, dynamische und thermische Belastbarkeit, als Faserrohstoffe und als Formmassen zunehmend an Bedeutung gewonnen. Aufgrund ihrer hohen Kristallinität werden insbesondere die Polyester auf Basis Terephthalsäure, Ethylenglykol, Butandiol-1,4 bzw. 1,4-Dimethylolcyclohexan gerne eingesetzt.

Für eine Vielzahl von Einsatzgebieten ist die vergleichsweise geringe Zähigkeit der teilkristallinen Polyalkylenterephthalate von Nachteil. Es hat daher nicht an Versuchen gefehlt, das Bruchverhalten von Polyalkylenterephthalaten, insbesondere von Polyethylen- und Polybutylenterephthalat, zu verbessern.

Mischungen aus Polyalkylenterephthalat und Polymerisaten mit Glasübergangstemperaturen unter — 20 °C besitzen zum Teil ausgezeichnete Zähigkeiten (DE-OS 1 694 200, DE-PS 22 43 609, DE-OS 22 48 242, DE-PS 23 48 377, DE-OS 23 64 318, DE-PS 24 44 584, DE-OS 27 26 256, US-PS 37 06 699, 40 86 796, 41 11 892, 42 57 929). Diese Polyalkylenterephthalat-Eigenschaften, wie z. B. die Steifigkeit, die Wärmeformbeständigkeit und die Fließfähigkeit in der Schmelze, werden durch diese Zusätze meistens negativ beeinflußt.

Andere Methoden zur Verbesserung des Bruchverhaltens bestehen in der Bildung von Cokondensaten aus Polyalkylenterephthalaten und bifunktionellen Polymeren mit einer niedrigen Einfriertemperatur, z. B. Polyetherdiolen oder Dimerfettsäuren (DE-OS 20 35 333, 22 40 801, 23 05 499, 24 58 472, 24 60 257, 33 14 257, EP-A 19 575). Die so modifizierten Polyester besitzen zwar eine gute Zähigkeit, insbesondere auch bei tiefen Temperaturen, aber zum Teil stark verminderte Festigkeiten und Wärmeformbeständigkeiten. Zusätze (glasfaserverstärkter) aromatischer Polycarbonate zu Mischungen aus Polybutylen- und Polyethylenterephthalaten (DE-OS 27 56 925) steigern zwar die Kerbschlagzähigkeit, führen allerdings zu einer unerwünschten Zunahme der Schmelzviskosität.

Bekannt sind auch Cokondensate aus Polyalkylenterephthalaten und aliphatischen niedermolekularen Polycarbonaten (US 4.171.422 ; DE-OS 2 435 507).

Die der Erfindung zugrundeliegende Aufgabe war es daher, mit geringen Mengen eines geeigneten Modifikators das Bruchverhalten von Polyalkylenterephthalaten hinreichend zu verbessern, ohne die typischen Festigkeitseigenschaften und die Fließfähigkeit in der Schmelze nennenswert zu beeinträchtigen.

Überraschenderweise wird dieses Ziel dadurch erreicht, daß Mischungen aus Polyalkylenterephthalat und aliphatischem Polycarbonat hergestellt werden. Die mechanischen Eigenschaften der erfindungsgemäßen Polyestermassen bleiben im Vergleich zu denen der unmodifizierten Polyalkylenterephthalate nahezu unverändert ; die Fließfähigkeit in der Schmelze wird sogar noch verbessert. Im Gegensatz dazu wird durch Cokondensation aus Polyalkylenterephthalat und niedermolekularem Polycarbonat das mechanische Eigenschaftsniveau, insbesondere die Wärmeformbeständigkeit, verglichen mit den erfindungsgemäßen Mischungen, deutlich verringert.

Das durch kautschukelastische Polymerisate schlagzäh modifizierte Polyalkylenterephthalat weist überraschenderweise erhöhte Zähigkeiten auf, wenn es aliphatisches Polycarbonat enthält.

Besonders überraschend ist das gegenüber glasfaserverstärktem Polybutylenterephthalat stark verbesserte Heißluftalterungsverhalten der glasfaserverstärkten erfindungsgemäßen Mischungen.

Gegenstand der Erfindung sind Mischungen aus

I. 85 bis 99,5 vorzugsweise 90 bis 96, Gew.-% Polyalkylenterephthalat,
II. 0,5 bis 15, vorzugsweise 4 bis 10, Gew.-% Polycarbonat und gegebenenfalls
III. üblichen Zusätzen,

wobei sich die Prozentangaben auf die Summe I + II beziehen, dadurch gekennzeichnet, daß das Polycarbonat II ein Poly-$C_3$-$C_{12}$-alkylen-carbonat mit einem als Zahlenmittel bestimmten Molekulargewicht von 1 000 bis 25 000, vorzugsweise von 1 500 bis 15 000, insbesondere von 6 000 bis 12 000 (bis zu Molekulargewichten von 6 000 dampfdruckosmometrisch, darüber membranosmometrisch, jeweils in Dichlormethan als Lösungsmittel, bestimmt), ist und daß die Mischungen frei von Phosphoniumverbindungen aus der Gruppe Tetra-n-$C_1$-$C_6$-alkylphosphoniumacetate und -phosphoniumhalogenide sind.

Polyalkylenterephthalate I im Sinne der Erfindung sind Reaktionsprodukte aus aromatischen Dicarbonsäuren oder ihren reaktionsfähigen Derivaten (z. B. Dimethylestern oder Anhydriden) und aliphatischen, cycloaliphatischen oder araliphatischen Diolen und Mischungen dieser Reaktionsprodukte.

Bevorzugte Polyalkylenterephthalate I lassen sich aus Terephthalsäure (oder ihren reaktionsfähigen

2

Derivaten) und aliphatischen Diolen mit 2 bis 10 C-Atomen oder cycloaliphatischen Diolen mit 6 bis 12 C-Atomen nach bekannten Methoden herstellen (Kunststoff-Handbuch, Bd. VIII, S. 695 ff., Carl Hanser Verlag, München, 1973).

Bevorzugte Polyalkylenterephthalate I enthalten mindestens 80, vorzugsweise mindestens 90 Mol-%, bezogen auf die Dicarbonsäurekomponente, Terephthalsäurereste und mindestens 80, vorzugsweise mindestens 90 Mol-%, bezogen auf die Diolkomponente, Ethylenglykol- und/oder Butandiol-1,4-reste.

Die bevorzugten Polyalkylenterephthalate I können neben Terephthalsäureresten bis zu 20 Mol-%, vorzugsweise bis zu 10 Mol-%, Reste anderer aromatischer oder cycloaliphatischer Dicarbonsäuren mit 8 bis 14 C-Atomen oder aliphatischer Dicarbonsäuren mit 4 bis 12 C-Atomen enthalten, wie z. B. Reste von Phthalsäure, Isophthalsäure, Naphthalin-2,6-dicarbonsäure, 4,4'-Diphenyldicarbonsäure, Bernstein-, Adipin-, Sebacinsäure, Azelainsäure, Cyclohexandiessigsäure.

Die bevorzugten Polyalkylenterephthalate I können neben Ethylenglykol- bzw. Butandiol-1,4-resten bis zu 20 Mol-%, vorzugsweise bis zu 10 Mol-%, Reste anderer aliphatischer Diole mit 3 oder 5 bis 12 C-Atomen oder cycloaliphatischer Diole mit 6 bis 21 C-Atomen enthalten (wobei unter aliphatischen Diolen Verbindungen verstanden werden sollen, deren Hydroxylgruppen an Kohlenstoffatome gebunden sind, die einer aliphatischen Gruppierung angehören), z. B. Reste von Propandiol-1,3, Neopentylglykol, Pentandiol-1,5, Hexandiol-1,6, Cyclohexan-dimethanol-1,4, 3-Ethylpentandiol-2,4, 2-Methylpentandiol-2,4, 2,2,4-Trimethylpentandiol-1,3, und -1,5, 2-Ethylhexandiol-1,3, 2,2-Diethylpropandiol-1,3, Hexandiol-2,5, 1,4-Di-(β-hydroxyethoxy)-benzol, 2,2-Bis-(4-hydroxycyclohexyl)-propan, 2,4-Dihydroxy-1,1,3,3- tetramethyl-cyclobutan, 2,2-Bis-(3-β-hydroxy-ethoxyphenyl)- propan und 2,2-Bis-(4-hydroxypropoxyphenyl)-propan (DE-OS 24 07 674, 24 07 776, 27 15 932).

Die Polyalkylenterephthalate I können durch Einbau relativ kleiner Mengen 3- oder 4-wertiger Alkohole oder 3- oder 4-basischer Carbonsäuren, z. B. gemäß DE-OS 19 00 270 und US-PS 3 692 744, verzweigt werden. Beispiele bevorzugter Verzweigungsmittel sind Trimesinsäure, Trimellithsäure, Trimethylolethan und -propan und Pentaerythrit.

Besonders bevorzugt sind Polyalkylenterephthalate I, die allein aus Terephthalsäure oder deren reaktionsfähigen Derivaten (z. B. deren Dialkylestern) und Ethylenglykol und/oder Butandiol-1,4 hergestellt worden sind, und Mischungen dieser Polyalkylenterephthalate.

Bevorzugte Mischungen enthalten 1 bis 50, vorzugsweise 1 bis 30, Gew.-% Polyethylenterephthalat und 50 bis 99, vorzugsweise 70 bis 99, Gew.-% Polybutylenterephthalat.

Die als Komponente I vorzugsweise verwendeten Polyalkylenterephthalate besitzen im allgemeinen eine Intrinsic-Viskosität von 0,4 bis 1,5 dl/g, vorzugsweise 0,5 bis 1,3 dl/g, insbesondere 0,6 bis 1,2 dl/g, jeweils gemessen in Phenol/o-Dichlorbenzol (1 : 1 Gewichtsteile) bei 25 °C im Ubbelohde-Viskosimeter.

Polycarbonate II im Sinne der Erfindung sind Reaktionsprodukte aus aliphatischen Diolen mit 3-12, vorzugsweise 3-6, Kohlenstoffatomen und reaktiven Kohlensäurederivaten, wie Dialkyl- und Diarylcarbonaten, Chlorkohlensäureestern und Phosgen.

Bevorzugte aliphatische Diole mit 3-6 Kohlenstoffatomen sind z. B. Propandiol-1,3, Butandiol-1,4, Pentandiol-1,5, 2-Ethylpropandiol-1,3, 2,2-Dimethylpropandiol-1,3 und insbesondere Hexandiol-1,6.

In untergeordnetem Maße können als Verzweiger weniger als 5 Gew.-%, vorzugsweise weniger als 2 Gew.-%, bezogen auf die Summe der Alkoholkomponenten, tri- oder höherfunktioneller Alkohole, wie Pentaerythrit, Trimethylolethan und bevorzugt Trimethylolpropan, eingesetzt werden.

Weiterhin kommen als Komponente II Cokondensate der obengenannten Polycarbonate untereinander oder mit Polyetherdiolen in Frage, wobei als Polyetherdiol-Komponente z. B. Diethylenglykol, Dipropylenglykol, Tri-, Tetra- und Octaethylenglykol, Polytetrahydrofuran und andere Polyalkylenglykole mit einem (als Zahlenmittel bestimmten) Molekulargewicht bis zu 3 000 verwendet werden. Der Polyetherdiolanteil kann dabei bis zu 30 Gew.-%, vorzugsweise 10 bis 25 Gew.-%, bezogen auf das Gesamtgewicht der Komponente II, betragen.

Nach einer bevorzugten Ausführungsform werden als Komponente I eine Polyalkylenterephthalat mit einer Intrinsic-Viskosität von mindestens 1,2 dl/g, vorzugsweise mindestens 1,25 dl/g (gemessen wie oben angegeben) und als Komponente II ein Polycarbonat mit 10 bis 25 Gew.-%, bezogen auf Komponente II, Resten Ethergruppen-haltiger Diole, wobei vorzugsweise jeweils 2 bis 4 C-Atome durch Ether-Sauerstofatome voneinander getrennt sind, eingesetzt. Die Mischungen dieser bevorzugten Ausführungsform zeichnen sich dadurch besonders aus, daß bereits sehr kleine Mengen Polycarbonat II zu den erfindungsgemäßen Effekten führen.

Die aliphatischen Polycarbonate II können Isocyanat-, $C_2$-$C_{10}$-Alkylurethan-, $C_1$-$C_6$-Alkoxycarbonylendgruppen, bevorzugt aber Hydroxylendgruppen besitzen. Sie können nach literaturbekannten Verfahren hergestellt werden ; vgl. z. B. J. Am. Chem. Soc. 80, 4596 (1958) ; 55, 5031 (1933) ; 52, 314 (1930) ; Houben-Weyl, Methoden der organischen Chemie, Bd. E4, S. 64 ff. (1983),

Die erfindungsgemäßen Formmassen können als Komponente III z. B. übliche Additive, wie Gleit- und Entformungsmittel, Nukleiermittel, Stabilisatoren, Füll- und Verstärkungsstoffe, Flammschutzmittel, Farbstoffe sowie kautschukelastische Polymerisate enthalten.

Die gefüllten bzw. verstärkten Formmassen können bis zu 60, vorzugsweise 10 bis 60 Gew.-%, bezogen auf die gefüllte bzw. verstärkte Formmasse, Füll- und/oder Verstärkungsstoffe enthalten. Bevorzugte Verstärkungsstoffe sind Glasfasern. Bevorzugte Füllstoffe, die auch verstärkend wirken können, sind z. B. Glaskugeln, Glimmer, Silikate, Quarz, Talkum, Titandioxid, Wollastonit.

Die mit Flammschutzmitteln ausgerüsteten Formmassen enthalten Flammschutzmittel in einer Konzentration von im allgemeinen 3 bis 15 Gew.-%, bezogen auf die flammgeschützten Formmassen.

Es kommen alle bekannten Flammschutzmittel in Frage, wie z. B. Polyhalogendiphenyl, Polyhalogendiphenylether, Polyhalogenphthalsäure und ihre Derivate und Polyhalogenoligo- und -polycarbonate, wobei die entsprechenden Bromverbindungen besonders wirksam sind. Außerdem enthalten sie in der Regel einen Synergisten, wie z. B. Antimontrioxid.

Bevorzugte Beispiele geeigneter kautschukelastischer Polymerisate III, die in der Regel in Mengen von 10 bis 40 Gew.-%, bezogen auf die Summe der Komponenten I und II, eingesetzt werden können, umfassen Copolymerisate - insbesondere Pfropfcopolymerisate - mit einer Glasübergangstemperatur unter —30 °C, die im wesentlichen aus mindestens 2 der folgenden Monomeren erhältlich sind : Chloropren, Butadien-1,3, Isopren, Styrol, Acrylnitril, Ethylen, Propylen, Vinylacetat und (Meth)-Acrylsäureester mit 1 bis 18 C-Atomen in der Alkoholkomponente ; also Polymerisate, wie sie z. B. in « Methoden der Organischen Chemie » (Houben-Weyl), Bd. 14/1, Georg Thieme Verlag, Stuttgart 1961, S. 393-406 und in C.B. Bucknall, « Toughened Plastics », Appl. Science Publishers, London 1977, beschrieben sind.

Bevorzugte Polymerisate III sind mindestens partiell vernetzt und besitzen Gelgehalte von über 20, vorzugsweise über 40 Gew.-%, insbesondere über 60 Gew.-%.

Bevorzugte Polymerisate III sind Ethylen/Vinylacetat-Copolymerisate mit 15 bis 60 Gew.-% Vinylacetatresten und Schmelzindices von nicht fließfähig bis 1 000, vorzugsweise von 0,1 bis 20, gemessen bei 190 °C und 2,16 kg Belastung nach DIN 53 735.

Bevorzugte Polymerisate III sind z. B. auch die sogenannten EPM- bzw. EPDM-Kautschuke, in denen das Gewichtsverhältnis von Ethylen- zu Propylenresten im Bereich von 40 : 60 bis 65 : 35 liegt.

Die Mooney-Viskositäten ($ML_{1-4}/100$ °C) der EPM- bzw. EPDM-Kautschuke können zwischen 25 bis 200, vorzugsweise zwischen 35 bis 120, liegen.

Die verwendeten Ethylen/Propylen-Copolymerisate (EPM) besitzen praktisch keine Doppelbindungen, während die Ethylen/Propylen/Dien-Terpolymerisate (EPDM) 1 bis 20 Doppelbindungen/1000 C-Atome aufweisen können. Als geeignete Dien-monomere im EPDM seien beispielsweise genannt : konjugierte Diene, z. B. Isopren und Butadien-1,3, und nichtkonjugierte Diene mit 5 bis 25 C-Atome, z. B. 1,4-Pentadien, 1,4-Hexadien, 1,5-Hexadien, 2,5-Dimethyl-1,5-hexadien und 1,4-Octadien ; cyclische Diene, z. B. Cyclopentadien, Cyclohexadien, Cyclooctadien und Dicyclopentadien ; Alkenylnorbornene, z. B. 5-Ethyliden-2-norbornen, 5-Butyliden-2-norbornen, 2-Metallyl-5-norbornen, 2-Isopropenyl-5-norbornen und Tricyclodiene.

Bevorzugt sind die nichtkonjugierten Diene Hexandien-1,5, Ethyliden-norbornen oder Dicyclopentadien. Der Diengehalt im EPDM beträgt vorzugsweise 0,5 bis 10 Gew.-%.

Derartige EPM- bzw. EPDM-Kautschuke sind z. B. in der DE-OS 28 08 709 beschrieben.

Bevorzugte Polymerisate III sind auch selektiv hydrierte Blockcopolymerisate eines vinylaromatischen Monomeren und eines konjugierten Diens. Diese Blockcopolymerisate sind bekannt. Im allgemeinen kann für die Herstellung der geeigneten Blockcopolymerisate aus Styrol, α-Methylstyrol, Vinyltoluol usw. und aus konjugierten Dienen, wie Butadien, Isopren usw., die für die Herstellung von Styrol-Dien-Blockcopolymerisaten verwendete Technologie benutzt werden, die in « Encyclopedia of Polymer Science and Technology », Bd. 15, Interscience, N. Y. (1971) auf den Seiten 508 ff., beschrieben ist. Die selektive Hydrierung kann auf an sich bekannte Weise durchgeführt werden, wobei die ethylenischen Doppelbindungen im wesentlichen vollständig hydriert werden, während die aromatischen Doppelbindungen im wesentlichen unbeeinflußt bleiben. Derartige selektiv hydrierte Blockcopolymerisate werden z. B. in der DE-OS 30 00 282 beschrieben.

Besonders bevorzugte Polymerisate III sind Pfropfpolymerisate.

Bevorzugte Pfropfpolymerisate III besitzen mittlere Teilchendurchmesser $d_{50}$ von 0,05 bis 1, vorzugsweise von 0,1 bis 0,8, insbesondere von 0,2 bis 0,6 μm.

Der mittlere Teilchendurchmesser $d_{50}$ ist der Durchmesser, oberhalb und unterhalb dessen jeweils 50 Gew.-% der Teilchen liegen. Er kann mittels Ultrazentrifugen-Messungen (W. Scholtan, H. Lange, Kolloid. Z. und Z. Polymere 250 (1972), 782-796) oder mittels Elektronenmikroskopie und anschließende Teilchenauszählung (G. Kämpf, H. Schuster, Angew. Makromolekulare Chemie 14, (1970), 111-129) bestimmt werden.

Die Pfropfpolymerisate III sind vernetzt und haben Gelgehalte von mindestens 50 Gew.-%, vorzugsweise mindestens 80 Gew.-% und insbesondere von mindestens 90 Gew.-%, bezogen auf Pfropfpolymerisat III.

Der Gelgehalt der vernetzten Dienkautschuke wird bei 25 °C in Toluol, der Gelgehalt der vernetzten Acrylatkautschuke bei 25 °C in Dimethylformamid bestimmt (M. Hoffmann, H. Krömer, R. Kuhn, Polymeranalytik I und II, Georg Thieme Verlag Stuttgart 1977).

Bevorzugte Pfropfpolymerisate III sind Pfropfpolymerisate von 15 bis 60, vorzugsweise 20 bis 50, insbesondere 25 bis 40 Gew.-% wenigstens eines Vinyl- oder Vinylidenmomeren aus der Reihe Styrol, α-Methylstyrol, Acrylnitril, $C_1$-$C_8$-Alkylacrylat, $C_1$-$C_8$-Alkylmethacrylat, Hydroxy-$C_2$-$C_8$-alkyl-(meth)acrylat, Epoxy-$C_2$-$C_8$-alkyl (meth)acrylat auf 40 bis 85, vorzugsweise 50 bis 80, insbesondere 60 bis 75 Gew.-% teilchenförmigem vernetztem Dien- oder Acrylatkautschuk, jeweils bezogen auf Pfropfpolymerisat III.

Bevorzugte Pfropfmonomere sind Methylmethacrylat sowie Mischungen auf Styrol und Methylmethacrylat und Mischungen aus Styrol und Acrylnitril.

Bevorzugte Dienkautschuke sind vernetzte Homo- und/oder Copolymerisate aus konjugierten $C_4$-$C_6$-Dienen. Bevorzugtes Dien ist Butandien-1,3. Die Diencopolymerisate können neben den Dienresten bis zu 30 Gew.-%, bezogen auf Diencopolymerisat, Reste anderer ethylenisch ungesättigter Monomerer, wie z. B. Styrol, Acrylnitril, Ester der Acryl- oder Methacrylsäure mit einwertigen $C_1$-$C_4$-Alkoholen, wie z. B. Methacrylat, Ethylacrylat, Methylmethacrylat, Ethylmethacrylat, enthalten.

Die Herstellung der Dienkautschuk-Pfropfgrundlage und der daraus hergestellten Pfropfpolymerisate wird z. B. in « Methoden der Organischen Chemie » (Houben-Weyl), Bd. 14/1, Georg Thieme Verlag, Stuttgart 1961, S. 393-406, sowie in Ullmanns Encyclopädie der technischen Chemie, 4. Auflage Bd. 19, Verlag Chemie, Weinheim, 1981, S. 279 bis 284, beschrieben.

Bevorzugte Pfropfgrundlagen auf Basis Acrylatkautschuk sind Polymerisate, die durch Polymerisation von $C_1$-$C_8$-Alkylacrylaten erhalten werden. Die Polymerisate können auch Copolymerisate der Acrylsäureester mit bis zu 40 Gew.-%, bezogen auf Copolymerisat, anderer Vinylmonomerer, wie Styrol, Acrylnitril, Methylmethacrylat, Vinylester, Vinylether, sein.

Die Acrylatkautschuke sind vernetzt.

Bevorzugte Beispiele für vernetzende Monomerer mit mehr als einer copolymerisierbaren Doppelbindung sind Ester ungesättigter $C_3$-$C_{12}$-Monocarbonsäuren und ungesättigter einwertiger $C_2$-$C_{12}$-Alkohole oder gesättigter $C_2$-$C_{20}$-Polyole mit 2 bis 4 OH-Gruppen, wie z. B. mehrfach ungesättigte heterocyclische Verbindungen, wie Trivinyl-, Triallylcyanurat und -isocyanurat ; insbesondere Triallylcyanurat ; polyfunktionelle Vinylverbindungen, wie Di- und Trivinylbenzole ; aber auch Triallylphosphat.

Bevorzugte vernetzende Monomere sind Allylmethacrylat, Ethylenglykoldimethacrylat, Diallylphthalat und heterocyclische Verbindungen, die mindestens drei copolymerisierbare ethylenisch ungesättigte Doppelbindungen aufweisen.

Besonders bevorzugte vernetzende Monomere sind die cyclischen Monomeren Triallylcyanurat, Triallylisocyanurat, Trivinylcyanurat, Tris-acryloylhexahydro-s-triazin, Triallylbenzole.

Die Menge der vernetzenden Monomeren beträgt vorzugsweise 0,02 bis 5, insbesondere 0,05 bis 2 Gew.-%, bezogen auf Kautschuk-Pfropfgrundlage.

Bei cyclischen, vernetzenden Monomeren mit mindestens drei ethylenisch ungesättigten Doppelbindungen ist es vorteilhaft, nicht mehr als 1 Gew.-%, bezogen auf Kautschuk-Pfropfgrundlage, zu verwenden.

Acrylatkautschuke können auch mehrschalige Produkte sein, die einen vernetzten Dienkautschuk aus einem oder mehreren konjugierten Dienen, wie Polybutadien, oder ein Copolymerisat eines konjugierten Diens mit einem ethylenisch ungesättigten Monomer, wie Styrol und/oder Acrylnitril, als Kern und anpolymerisiertes Acrylatmonomer als Schale enthalten.

Der Anteil des Polydien-Kerns in solchen mehrschaligen Kautschuken kann 0,1 bis 80, bevorzugt 10 bis 50 Gew.-% betragen. Schale(n) und Kern können unabhängig voneinander teilvernetzt oder hochvernetzt sein.

Bevorzugte gepfropfte Acrylatkautschuke sind solche, die

a) mit cyclischen trifunktionellen Comonomeren wie Triallylcyanurat und Triallylisocyanurat vernetzt sind (beschrieben in DE-OS 30 39 114) ;
b) einen Polybutadien-Kern enthalten (beschrieben in DE-OS 30 39 115) ;
c) hergestellt wurden « in Abwesenheit von Suspendiermittel » (beschrieben in DE-OS 31 17 052).

Bei der Herstellung der Pfropfpolymerisate III durch Pfropfcopolymerisation, die üblicherweise in Gegenwart von Radikalstarten, z. B. wasserlöslichen Initiatoren, Emulgatoren oder Komplexbildnern/Pfropfaktivatoren sowie Reglern durchgeführt wird, bilden sich im allgemeinen neben dem eigentlichen Pfropfcopolymerisat in bestimmten Ausmaß auch freie Polymerisate bzw. Copolymerisate der die Pfropfhülle bildenden Pfropfmonomeren.

Pfropfpolymerisate III im Sinne der Erfindung sind deshalb durch Polymerisation von Pfropfmonomeren in Gegenwart des Kautschuklatex erhaltene Produkte, genau genommen also im allgemeinen ein Gemisch aus Pfropfcopolymerisat und freiem (Co)polymerisat der Pfropfmonomeren.

Die erfindungsgemäßen Formmassen weisen optimale Eigenschaften auf, wenn die Menge an freiem (Co)Polymerisat 15 Gew.-%, vorzugsweise 10 Gew.-%, insbesondere 7 Gew.-%, bezogen auf Komponente III, nicht übersteigt. Der Staudinger-Index dieser freien (Co)polymerisate soll weniger als 0,6 dl/g, vorzugsweise weniger als 0,4 dl/g betragen, gemessen im Dimethylformamid bei 25 °C.

Bevorzugte gepfropfte Dienkautschuke sind z. B. in der DE-PS 2 348 377 und in den DE-OS 2 927 576, 3 025 605, bevorzugte gepfropfte Acrylatkautschuke z. B. in der DE-PS 2 444 584 und in den DE-OS 2 726 256, 3 039 114, 3 039 115, 3 117 052 beschrieben.

Die Herstellung der Mischungen aus thermoplastischem Polyester I, Polycarbonat II sowie gegebenenfalls weiteren Komponenten III kann in den üblichen Mischaggregaten, wie Walzen, Knetern, Ein- und Mehrwellenextrudern, erfolgen. Die Temperatur bei der Herstellung der Mischungen sollte mindestens 10 °C und zweckmäßig höchstens 90 °C oberhalb des Schmelzpunktes des Polyesters liegen.

Das Mischen kann diskontinuierlich oder kontinuierlich unter Bedingungen, bei denen eine Oxidation weitgehend ausgeschlossen ist, d. h. unter inertem Schutzgas wie Stickstoff, Kohlendioxid, Argon oder Helium und/oder vermindertem Druck, durchgeführt werden.

Es ist nicht auszuschließen, daß die erfindungsgemäßen Mischungen während der Compoundierung bzw. Verarbeitung in geringem Maß durch Umesterung zu Polyestercarbonaten führen. Die erfindungsgemäßen Mischungen enthalten in der Regel weniger als 30, vorzugsweise weniger als 20, insbesondere weniger als 15, Gew.-% Polyestercarbonat.

Um eine unerwünschte Umesterung zu vermeiden, kann es sinnvoll sein, den erfindungsgemäßen Mischungen eine wirksame Menge Umesterungsinhibitor zuzusetzen. Derartige Inhibitoren sind bekannt ; vgl. z. B. J. Devaux, P. Godard und J. P. Mercier in Polym. Eng. Sci. 22 (4), 229-233 (1982). Bevorzugte Inhibitoren sind Phosphorigsäureester, wie z. B. Triphenylphosphit, Diphenylphosphit, Dibenzylphosphit, Decyl-diphenyl-phosphit, Phenyl-didecyl-phosphit und Di-n-octadecyl-phosphit. Sie werden vorzugsweise in Mengen von 0,1 bis 1 Gew.-%, bezogen auf erfindungsgemäße Mischungen, eingesetzt.

Die erfindungsgemäßen thermoplastisch verarbeitbaren Massen können z. B. zur Herstellung von Gehäuseteilen, Steckverbindungen und anderen dünnwandigen Spritzgußkörpern verwendet werden.

Beispiele

Polycarbonat A

Aus einem Gemisch von 2,50 kg (1,17 Mol*) Polyhexamethylencarbonat ($M_N$ = 2140 ; OH-Zahl = 52,5) und 1,50 g (1,90 mMol) Titantetradodecylat wurden unter Rühren im Laufe von 4 Stunden bei 180-220 °C/3,5-0,4 mbar 136 g (1,15 Mol) 1,6-Hexandiol abdestilliert. Der erkaltete Rückstand wurde zerkleinert. Man erhielt ein Polyhexamethylencarbonat mit
OH-Zahl : 22,5
Molmasse ($M_N$) : 5000
Schmelzbereich : 55-60 °C.

Polycarbonat B

Aus einem Gemisch von 2,00 kg (17,0 Mol) Hexandiol-1,6, 2,60 kg (22,0 Mol) Diethylcarbonat und 200 mg Kaliumcarbonat wurden bei Normaldruck über eine 60 cm lange

Die Funktionalität des Polyhexamethylencarbonats ist 2.

Füllkörperkolonne bei 100-180 °C 1770 g Ethanol/Diethylcarbonat-Gemisch mit 1 550 g (33,7 Mol) Ethanol und bei 140-180 °C/200-22 mbar weitere 324 g Ethanol/Diethylcarbonat-Gemisch mit 28 g (0,62 Mol) Ethanol abdestilliert. Der Rückstand wurde in Methylenchlorid gelöst, mehrfach mit Wasser ausgeschüttelt, die organische Phase mit Natrimsulfat getrocknet und das Lösungsmittel im Vakuum abdestilliert. Man erhielt ein Polyhexamethylencarbonat mit Ethoxycarbonyloxy-Endgruppen.
Molmasse ($M_N$) : 1500

Polycarbonat C

In 222 g (1,00 Mol) Isophorondiisocyanat und 150 mg Dibutylzinndilaurat wurden bei 80 °C unter Stickstoffatmosphäre innerhalb von 70 Minuten portionsweise 1,00 kg (0,47 Mol*) Polyhexamethylencarbonat ($M_N$ = 2140 ; OH-Zahl = 52,5) eingerührt und weitere 2 Stunden bei dieser Temperatur belassen. Man erhielt ein Polyhexamethylencarbonat mit Isocyanat-Endgruppen.
NCO-Wert : 0,805 mMol NCO/g Substanz
Molmasse ($M_N$) : 2480

Polycarbonat D

Aus einem Gemisch von 1,60 kg (0,800 Mol) Polyhexamethylencarbonat ($M_N$ = 2140 ; OH-Zahl = 52,5), 400 g (0,400 Mol) eines Polytetramethylenoxids ($M_N$ = 1 000 ; OH-Zahl = 112), 203 g (0,950 Mol) Diphenylcarbonat und 500 mg Dibutylzinndilaurat wurden unter Rühren innerhalb von 12 Stunden bei 120-170 °C/3,0-0,3 mbar 175 g Phenol abdestilliert. Der erkaltete Rückstand wurde zerkleinert. Man erhielt ein etherhaltiges Polyhexamethylencarbonat mit
OH-Zahl : 7
Molmasse ($M_N$) : 14 000

Polycarbonat E

Aus einem Gemisch von 2,00 kg (0,935 Mol) Polyhexamethylencarbonat ($M_N$ = 2140 ; OH-Zahl = 52,5), 164 g (0,767 Mol) Diphenylcarbonat und 200 mg Dibutylzinndilaurat wurden unter Rühren

*) Unter der Mol-Angabe des polydispersen System wird verstanden :
Mole = Mol OH-Gruppe/Funktionalität des Polymeren = OH-Zahl × Einwaage in kg/56,11 × Funktionalität

bei 120-170 °C/3,0-0,5 mbar innerhalb von 12 Stunden 143 g Phenol abdestilliert. Der erkaltete Rückstand wurde zerkleinert. Man erhielt ein Polycarbonat mit OH-Zahl : 9,5

    Molmasse ($M_N$) : 11,500

    Schmelzbereich : 55-60 °C.

Compoundierung

Die Produkte für die Beispiele wurden auf einem Zweiwellen-Extruder hergestellt. Das granulierte Produkt wurde vor der Verarbeitung bei 120 °C 5 Stunden lang im Umlufttrockenschrank getrocknet. Die verwendeten Normprüfkörper werden auf üblichen Spritzgußmaschinen (Formtemperatur 80 °C ; Massetemperatur 250-260 °C) hergestellt. Die thermischen und mechanischen Eigenschaften wurden nach DIN- bzw. ASTM-Normen bestimmt (siehe Beispiele). Die Fließlängen der Polykondensatschmelze wurden in einer Fließspirale mit 10 mm Durchmesser und 2 mm Dicke unter konstanten Spritzdruck- und Temperaturverhältnissen bestimmt.

Beispiele 1-6

Formmassen aus einem unverstärkten Polybutylenterephthalat (I.V. = 1,25 dl/g) und je einem aliphatischen Polycarbonat A-C wurden bei 260 °C Massetemperatur auf Zweiwellen-Extrudern hergestellt. Die Zusammensetzung und die Eigenschaften der modifizierten Polybutylenterephthalate sind in Tabelle 1 zusammengefaßt und den Werten für unmodifiziertes Polybutylenterephthalat gegenübergestellt.

Tabelle 1

| Beispiel | 1 | 2 | 3 | 4 | 5 | 6 |
|---|---|---|---|---|---|---|
| Gew.-% PBT | 97 | 95 | 92 | 95 | 95 | 100 |
| Polycarbonat/ Gew.-% | A/3 | A/5 | A/8 | B/5 | C/5 | - |
| Izod (J/m) (ASTM D 256) | 45 | 48 | 52 | 42 | 42 | 37 |
| Fließlänge (cm) | 54 | 56 | 68 | 53 | 54 | 48 |
| MFI* (g/10 min) (DIN 53 735) | 18 | 20 | 25 | 19 | 17 | 16 |
| Vicat-B (°C) (DIN 53 460) | 180 | 179 | 177 | 180 | 178 | 181 |
| Zug-E-Modul (MPa) (DIN 53 457) | 2500 | 2500 | 2450 | 2480 | 2450 | 2550 |

* Schmelzindex

Beispiele 7-10

Formmassen aus einem mit 30 Gew.-% Glasfaser verstärkten, Polybutylenterephthalat (I.V. = 0,92 dl/g) und je einem aliphatischen Polycarbonat A oder B wurden bei 260 °C Massetemperatur auf Zweiwellen-Extrudern hergestellt. Die Zusammensetzung und die Eigenschaften der modifizierten Polybutylenterephthalate sind in Tabelle 2 zusammengefaßt und den Werten für unmodifiziertes Polybutylenterephthalat gegenübergestellt.

(Siehe Tabelle 2 Seite 8 f.)

Tabelle 2

| Beispiel | 7 | 8 | 9 | 10 |
|---|---|---|---|---|
| Gew.-% PBT | 95 | 92 | 95 | 100 |
| Polycarbonat/Gew.-% | A/5 | A/8 | B/5 | - |
| Izod (J/m) (ASTM D 256) | 98 | - | 90 | 84 |
| Fließlänge (cm) | 60 | 66 | 61 | 56 |
| MFI (g/10 min.) (DIN 53 735) | 22 | 24 | 19 | 17 |
| Vicat-B | 210 | 210 | 212 | 214 |
| Zug-E-Modul (MPa) (DIN 53 457) | 9750 | 9780 | 9870 | 10600 |

Beispiele 11-13 : Heißluftalterungsverhalten

Formmassen aus einem glasfaserverstärkten Polybutylenterephthalat und dem aliphatischen Polycarbonat A, wie in den Beispielen 7 und 8 beschrieben, wurden zu Normkleinstäben (50 × 6 × 4 mm) verspritzt und in einem Heißluftofen auf die in Tabelle 3 angegebenen Temperaturen erhitzt. Nach den angegebenen Belastungszeiten wurde jeweils die Schlagzähigkeit bestimmt.

Tabelle 3

| Beispiel | | 11 | 12 | 13 |
|---|---|---|---|---|
| Gew.-% PBT | | 95 | 92 | 100 |
| Polycarbonat/Gew.-% | | A/5 | A/8 | - |
| RT | 0 h | 44 | 44 | 46 |
| | 300 h | 42 | 47 | 40 |
| 140° C | 1000 h | 40 | 46 | 34 |
| | 2000 h | 34 | 46 | 33 |
| $a_n$ $(kJ/m^2)$ | | | | |
| | 100 h | 39 | 42 | 35 |
| 160° C | 300 h | 38 | 47 | 37 |
| | 1000 h | 36 | 43 | 32 |
| | 2000 h | 37 | 37 | 25 |

Beispiele 14-17

Formmassen aus einem mit 23 Gew.-% ABS-Pfropfpolymerisat schlagzähmodifizierten Polybutylenterephthalat (I.V. = dl/g) und je einem aliphatischen Polycarbonat D und E wurden bei 260 °C Massetemperatur auf einer Zweiwellenschnecke hergestellt. Die Zusammensetzung und die Eigenschaften der modifizierten Polybutylenterephthalate sind in Tabelle 4 zusammengefaßt und den Werten für unmodifiziertes ABS-haltiges Polybutylenterephthalat gegenübergestellt :

Tabelle 4

| Beispiel | 14 | 15 | 16 | 17 |
|---|---|---|---|---|
| Gew.-% PBT | 77 | 76 | 76 | 75 |
| Gew.-% Kautschuk | 23 | 23 | 23 | 23 |
| Polycarbonat-Typ / Gew.-% | - | E/1 | D/1 | D/2 |
| $a_k$ (kJ/m²) Izod, R.T. | 62 | 73 | 77 | 81 |
| 0° C | 48 | 62 | 72 | 75 |
| -10° C | 18 | 23 | 21 | 20 |
| Vicat B (°C) | 128 | 126 | 132 | 120 |
| Zug-E-Modul (MPa) | 1680 | 1600 | 1644 | 1500 |
| Fließspirale (cm) | 38 | 40 | 42 | 43 |

Aus den Meßwerten der Tabellen 1, 2 und 4 ergeben sich die deutlich verbesserte Fließfähigkeit (bis ca. 45 %) und Kerbschlagzähigkeit (bis ca. 40 %) der erfindungsgemäßen Formmassen. Aus den Meßwerten der Tabelle 3 wird das verbesserte Heißluftalterungsverhalten der modifizierten Polybutylenterephthalat-Formmassen im Vergleich zu den unmodifizierten Typen deutlich. Während bei langer thermischer Belastung (160 °C) das Schlagzähigkeitsniveau des unmodifizierten Polyesters um ca. 45 % abnimmt, beobachtet man bei Polycarbonat-modifizierten PBT-Typen ausgehend von einem ungefähr gleichen Niveau eine erheblich geringere Absenkung der Schlagzähigkeit von ca. 15 %. Bei einer etwas geringeren Alterungstemperatur von 140 °C wird bei Zusatz ausreichender Mengen Polycarbonat die Schlagzähigkeit des Ausgangswertes erhalten, ja sogar noch leicht verbessert. Diese Eigenschaftsverbesserungen werden erreicht, ohne daß eine merkliche Verschlechterung der übrigen mechanischen Eigenschaften eintritt.

**Patentansprüche**

1. Mischungen aus
I. 85 bis 99,5 Gew.-% Polyalkylenterephthalat,
II. 0,5 bis 15 Gew.-% Polycarbonat und gegebenenfalls
III. üblichen Zusätzen,
wobei sich die Prozentangaben auf die Summe I + II beziehen,
dadurch gekennzeichnet, daß das Polycarbonat II ein Poly-$C_3$-$C_{12}$-alkylen-carbonat mit einem als Zahlenmittel bestimmten Molekulargewicht von 1 000 bis 25 000 ist und daß die Mischungen frei von Phosphoniumverbindungen aus der Gruppe Tetra-n-$C_1$-$C_6$-alkylphosphoniumacetat und -phosphoniumhalogenide sind.

2. Mischungen nach Anspruch 1 aus 90 bis 96 Gew.-% Komponente I, 4 bis 10 Gew.-% Komponente II und gegebenenfalls üblichen Zusätzen III.

3. Mischungen nach Ansprüchen 1 und 2, wobei das Molekulargewicht $M_n$ des Polycarbonats II 1 500 bis 15 000 beträgt.

4. Mischungen nach Ansprüchen 1-3, wobei das Molekulargewicht $M_n$ des Polycarbonats II 6 000 bis 12 000 beträgt.

5. Mischungen nach Ansprüchen 1 bis 4, wobei Komponente II ein Poly-$C_3$-$C_6$-alkylen-carbonat ist.

6. Mischungen nach Ansprüchen 1-5, wobei Komponente II ein Hexandiol-1,6-polycarbonat ist.

7. Mischungen nach Ansprüchen 1-6, wobei Komponente I eine Intrinsic-Viskosität von mindestens 1,2 dl/g besitzt und Komponente II ein Polycarbonat mit 10 bis 25 Gew.-%, bezogen auf Komponente II, Resten Ethergruppen-haltiger Diole ist.

8. Mischungen nach Ansprüche 1-7, die 10 bis 60 Gew.-%, bezogen auf gefüllte und verstärkte Mischung, Füll- und/oder Verstärkungsstoffe enthalten.

9. Verfahren zur Herstellung der Mischungen nach Ansprüchen 1 bis 8, dadurch gekennzeichnet, daß man die Komponenten mindestens 10 °C und höchstens 90 °C oberhalb des Schmelzpunkts der Komponente I auf geeigneten Aggregaten knetet oder extrudiert.

**EP 0 208 107 B1**

10. Verwendung der Mischungen nach Ansprüchen 1-8 zur Herstellung von Formkörpern, vornehmlich durch Spritzguß.


**Claims**

1. Mixtures of
   I. 85 to 99.5 % by weight polyalkylene terephthalate,
   II. 0.5 to 15 % by weight polycarbonate and, optionally,
   III. standard additives,
   the percentages being based on the sum of I + II,
   characterized in that polycarbonate II is a poly-$C_3$-$C_{12}$-alkylene carbonate having a number average molecular weight of 1 000 to 25 000 and in that the mixtures are free from phosphonium compounds from the group of tetra-n-$C_1$-$C_6$-alkyl phosphonium acetate and phosphonium halides.

2. Mixtures as claimed in claim 1 of 90 to 96 % by weight of component I, 4 to 10 % by weight of component II and, optionally, standard additives III.

3. Mixtures as claimed in claims 1 and 2 in which the molecular weight $M_n$ of the polycarbonate II is from 1 500 to 15 000.

4. Mixtures as claimed in claims 1 to 3 in which the molecular weight $M_n$ of the polycarbonate II is from 6 000 to 12 000.

5. Mixtures as claimed in claims 1 to 4 in which component II is a poly-$C_3$-$C_6$-alkylene carbonate.

6. Mixtures as claimed in claims 1 to 5 in which component II is a hexane-1,6-diol polycarbonate.

7. Mixtures as claimed in claims 1 to 6 in which component I has an intrinsic viscosity of at least 1.2 dl/g and component II is a polycarbonate containing 10 to 25 % by weight, based on component II, of residues of diols containing ether groups.

8. Mixtures as claimed in claims 1 to 7 containing from 10 to 60 % by weight, based on the filled and reinforced mixture, of fillers and/or reinforcing materials.

9. A process for the production of the mixtures claimed in claims 1 to 8, characterized in that the components are kneaded or extruded in suitable units at least 10 °C and at most 90 °C above the melting point of component I.

10. The use of the mixtures claimed in claims 1 to 8 for the production of mouldings, primarily by injection moulding.


**Revendications**

1. Mélanges de
   I. 85 à 99,5 % en poids d'un poly(téréphtalate d'alkylène),
   II. 0,5 à 15 % en poids d'un polycarbonate, et éventuellement
   III. des additifs usuels,
   les données en pourcentage se rapportant à la somme de (I + II),
   mélanges caractérisés en ce que le polycarbonate II est un poly(carbonate d'alkylène en $C_3$ à $C_{12}$) ayant un poids moléculaire, déterminé en moyenne en nombre, de 1 000 à 25 000, et en ce que les mélanges sont essentiellement dépourvus de composés de phosphonium de l'ensemble formé par des acétates et halogénures de tétra-n-alkyl (en $C_1$ à $C_6$) phosphonium.

2. Mélanges selon la revendication 1, constitué de 90 à 96 % en poids du composant I, 4 à 10 % en poids du composant II et éventuellement d'additifs usuels III.

3. Mélanges selon les revendications 1 et 2, dans lesquels le poids moléculaire $\bar{M}_n$ du polycarbonate II se situe entre 1 500 et 15 000.

4. Mélanges selon les revendications 1 à 3, dans lesquels le poids moléculaire $\bar{M}_n$ du polycarbonate II se situe entre 6 000 et 12 000.

5. Mélanges selon les revendications 1 à 4, dans lesquels le composant II est un poly(carbonate d'alkylène) en $C_3$ à $C_6$.

6. Mélanges selon les revendications 1 à 5, dans lesquels le composant II est un poly(carbonate d'hexanediol-1,6).

7. Mélanges selon les revendications 1 à 6, dans lesquels le composant I possède une viscosité intrinsèque au moins égale à 1,2 dl/g et le composant II est un polycarbonate comportant 10 à 25 % en poids, par rapport au composant II, de restes de diols contenant des groupes éthers.

8. Mélanges selon les revendications 1 à 7, qui contiennent 10 à 60 % en poids, par rapport au mélange chargé et renforcé, de charges et/ou de substances d'armature de renforcement.

9. Procédé pour préparer des mélanges selon les revendications 1 à 8, caractérisé en ce qu'on malaxe ou extrude, sur des appareils convenables, les composants à une température excédant d'au moins 10 °C d'au maximum 90 °C le point de fusion du composant I.

10. Utilisation des mélanges selon les revendications 1 à 8 pour produire des objets moulés ou conformés, que l'on obtient surtout par moulage par injection.

10